# EUROPEAN PATENT SPECIFICATION

(11) **EP 3 989 639 B1**
(45) Date of publication and mention of the grant of the patent: **10.12.2025**
(21) Application number: 20881265.1
(22) Date of filing: 20.10.2020
(51) Int. Cl.: H04W 36/00

(54) **BAND SWITCHING CONTROL METHOD AND BASE STATION**
VERFAHREN ZUR BANDUMSCHALTUNGSSTEUERUNG UND BASISSTATION
PROCÉDÉ DE COMMANDE DE COMMUTATION DE BANDE ET STATION DE BASE

(30) Priority: 30.10.2019 CN 201911044200
(43) Date of publication of application: 27.04.2022
(73) Proprietor: ZTE Corporation, Shenzhen, Guangdong 518057 (CN)
(72) Inventor: FEI, Peiyan, Shenzhen, Guangdong 518057 (CN)
(74) Representative: Ipsilon
(86) International application number: PCT/CN2020/122268
(87) International publication number: WO 2021/082993

(56) References cited:
- WO-A1-2017/088512
- WO-A1-2019/202649
- CN-A- 105 357 405
- CN-A- 107 426 769
- CN-A- 108 306 718
- CN-A- 110 351 054
- US-B1- 9 999 000
- LG ELECTRONICS: "Further consideration on HPUE in 3.5 GHz range", 3GPP DRAFT; R4-1709530(HPUE), vol. RAN WG4, 11 September 2017 (2017-09-11), Nagoya, Japan, pages 1 - 2, XP051331600

## Description

### TECHNICAL FIELD

The present invention relates to the field of communication technologies, in particular to a band switching control method and a base station.

### BACKGROUND

Increasing a signal transmission power of a user terminal improves the uplink experience of the user to some extent. At present, the 4th generation mobile communication technology (4G) gives a technical specification of high-power terminal in the R13 standard, and the 5th generation mobile communication technology (5G) gives a technical specification of high-power terminal in the R15 standard, i.e., a mainstream mobile communication technology has supported in the standard the improvement of the uplink performance.

Different terminals from different terminal manufacturers support different functions of high power transmission. For example, some terminals support signal uplink transmission with the high power only in a certain band or several bands, not in all bands.

It is found in practical application that when the terminal performs cell selecting, it generally selects a cell with the best connection signal strength. In this case, it may occur that a band of a cell to which a terminal configured with the high power transmission function is connected is not a high power transmission applicable band corresponding to the terminal, thus a high power transmission capability of the terminal cannot be fully utilized.

Chinese Patent Application CN105357405A provides a network switching method, a network switching device and a terminal. The network switching method comprises: detecting data traffic information within a preset time period, and generating a switching rule according to position information corresponding to the data traffic information; detecting current geographic position information and time information, and if the geographic position information and the time information are matched with the switching rule, acquiring a logic control parameter of an antenna switch of the terminal; adjusting the logic control parameter according to a preset target band list, wherein the target band list comprises at least one band of which the power consumption is higher than a preset power consumption threshold; and switching the current network working band according to the adjusted logic control parameter. By adopting the method and the device, when the network demand of the terminal is low, the consumption of batteries can be reduced, and the service time can be prolonged.

International Patent Application WO2017088512A1 provides a method and a device for network switching, and a terminal, the method comprising: detecting a current data connection state of a terminal, if the data connection state is connection by means of a Wi-Fi network, acquiring frequency band configuration parameters of the terminal; adjusting, according to a preset target frequency band list, the frequency band configuration parameters, the target frequency band list comprising at least one frequency band with power consumption higher than a preset threshold value; and switching, according to the adjusted frequency band configuration parameters, the operating frequency band of the current network.

### SUMMARY

Embodiments of the present invention provide a band switching control method, according to claim 1, and a base station, according to claim 9, which solve a problem that a band of a cell to which a terminal configured with a high power transmission class is connected does not match a high power transmission applicable band corresponding to the terminal.

### BRIEF DESCRIPTION OF THE DRAWINGS

FIG. 1 is a flowchart of a band switching control method according to an embodiment of the present invention;
FIG. 2 is a flowchart of another band switching control method according to an embodiment of the present invention;
FIG. 3 is a flowchart of an alternative implementation method of step S2a;
FIG. 4 is a flowchart of another alternative implementation method of step S2a;
FIG. 5 is a flowchart of still another band switching control method according to an embodiment of the present invention;
FIG. 6 is a flowchart of yet another band switching control method according to an embodiment of the present invention; and
FIG. 7 is a flowchart of still yet another band switching control method according to an embodiment of the present invention.

### DETAILED DESCRIPTION

In order for those skilled in the art to better understand the technical solutions of the present invention, a band switching control method and a base station provided in the present invention are described in detail below with reference to the accompanying drawings.

Exemplary embodiments are described more fully below with reference to the accompanying drawings, but these embodiments may be embodied in different forms and should not be construed to be limited to the embodiments described herein. On the contrary, these embodiments are provided for the purpose of making the present invention thorough and complete and will enable those skilled in the art to fully understand the scope of the present invention.

The terms used herein are intended to describe specific embodiments only and are not intended to limit the present invention. As used herein, singular forms "a" and "this" are also intended to include plural forms, unless the context clearly indicates otherwise. It should also be understood that, when the terms "including" and/or "consisting of" are used in this specification, the presence of said features, integers, steps, operations, elements, and/or components is specified, without excluding the presence or addition of one or more other features, integers, steps, operations, elements, components, and/or groups thereof.

It should be understood that while various elements may be described herein using the terms first, second, or the like, these elements should not be limited to these terms, which are used only to distinguish one object from another.

Unless otherwise defined, all terms (including technical and scientific terms) used herein have the same meanings as those generally understood by those of ordinary skill in the art. It should also be understood that terms such as those defined in commonly used dictionaries should be interpreted as having meanings consistent with their meanings in the context of the related art and the present invention, and should not be interpreted as having an idealized or overly formal meaning unless expressly so defined herein.

The term "band" in the present invention refers to a band divided by a long term evolution (LTE) technology. LTE is a technical standard of a universal mobile telecommunications system (UMTS). LTE divides a communication frequency into a plurality of bands, and specifies a frequency usage range corresponding to each of the bands.

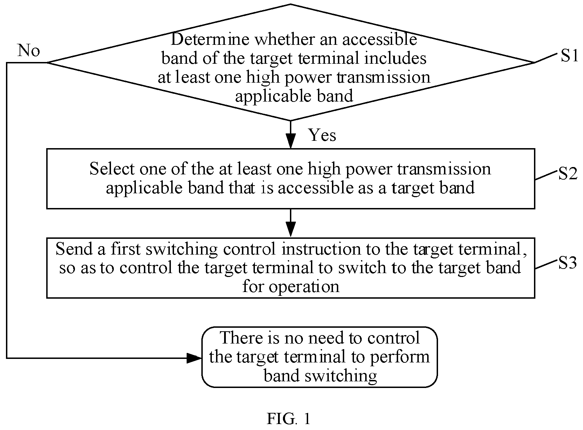

FIG. 1 is a flowchart of a band switching control method according to an embodiment of the present invention. As shown in FIG. 1, the band switching control method includes the following steps.

In S1, in response to a target terminal being configured with a high power transmission class but not operating in a high power transmission applicable band corresponding to the target terminal, it is determined that whether an accessible band of the target terminal includes at least one high power transmission applicable band.

When establishing a connection with a base station, the target terminal reports terminal capability information to the base station. Terminal capabilities include a radio access-related capability and a core network-related capability, such as a power transmission class configured for the target terminal, and the high power transmission applicable band corresponding to the target terminal when the target terminal is configured with the high power transmission class.

Take provisions in the 4G standard as an example, a default conventional power transmission class is power class 3, the high power transmission class includes power class 2 and power class 1, the maximum transmission power corresponding to power class 2 is 26dbm, and the maximum transmission power corresponding to power class 1 is 31dbm. When the terminal capability information reported by a 4G terminal records that the power transmission class configured for the 4G terminal includes only power class 3, it can be identified that the 4G terminal is not configured with the high power transmission class (i.e., not supporting a high power transmission function). When the terminal capability information records that the power transmission class configured for the 4G terminal includes not only power class 3 but also at least one of power class 2 and power class 1, it can be identified that the 4G terminal is configured with the high power transmission class (i.e., supporting the high power transmission function).

Although the content specified in the 5G standard for the high power transmission class is different from the content specified in the 4G standard, the principle for identifying whether a 5G terminal is configured with the high power transmission class is consistent with the principle for identifying whether the 4G terminal is configured with the high power transmission class, which thus will not be described in detail herein.

The target terminal further sends cell information to the base station, and the cell information includes information (e.g., cell identification, signal strength, band, etc.) about a cell to which the target terminal is currently connected and information about other cells to which the target terminal is able to be currently connected.

Based on the terminal capability information and the cell information, it is possible to effectively identify whether the target terminal is configured with the high power transmission class, and identify whether the target terminal operates in the high power transmission applicable band corresponding to the target terminal in response to the target terminal being configured with the high power transmission class.

In response to the target terminal being configured with the high power transmission class but not operating in the high power transmission applicable band corresponding to the target terminal, it may be determined whether the accessible band (i.e., a band of a cell to which the terminal is able to be connected) includes at least one high power transmission applicable band based on the cell information sent by the target terminal. In response to determining that the accessible band includes the at least one high power transmission applicable band corresponding to the target terminal, the step S2 is performed. And in response to determining that the accessible band does not include the high power transmission applicable band corresponding to the target terminal, there is no need to control the target terminal to perform band switching.

In S2, one of the at least one high power transmission applicable band that is accessible is selected as a target band.

One of the at least one high power transmission applicable band that is accessible is randomly selected as the target band, or one of the at least one high power transmission applicable band that is accessible is selected as the target band based on related information of a cell corresponding to the at least one high power transmission applicable band that is accessible and by a particular selection algorithm. In some implementations, a band with the best signal strength is selected as the target band from the at least one high power transmission applicable band that is accessible. It should be noted that a specific algorithm for selecting the target band is not limited in the technical solution of the present invention.

In S3, a first switching control instruction is sent to the target terminal.

The first switching control instruction is configured to control the target terminal to switch to the target band for operation.

In the technical solution of the present invention, the first switching control instruction is sent to the target terminal in response to the target terminal being configured with the high power transmission class but not operating in the high power transmission applicable band corresponding to the target terminal, so as to control the target terminal to switch to operate in the high power transmission applicable band corresponding to the target terminal, thereby fully utilizing the high power transmission capability of the terminal.

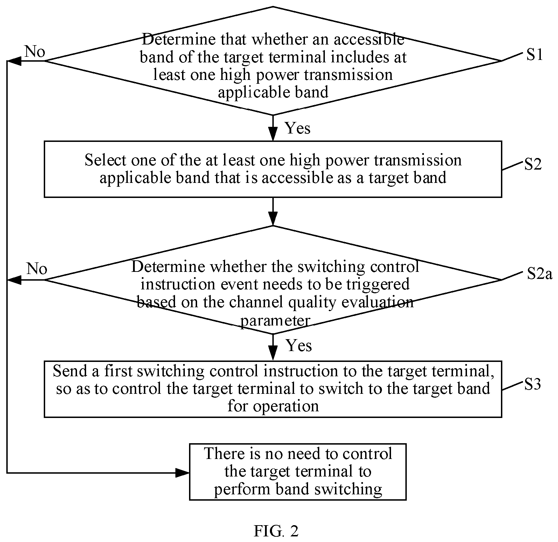

FIG. 2 is a flowchart of another band switching control method according to an embodiment of the present invention. As shown in FIG. 2, the method further includes step S2a in addition to the above steps S1 to S3.

In S1, in response to a target terminal being configured with a high power transmission class but not operating in a high power transmission applicable band corresponding to the target terminal, it is determined that whether an accessible band of the target terminal includes at least one high power transmission applicable band.

In S1, in response to determining that the accessible band includes the at least one high power transmission applicable band corresponding to the target terminal, step S2 is performed; in response to determining that the accessible band does not include the high power transmission applicable band corresponding to the target terminal, there is no need to control the target terminal to perform band switching.

In S2, one of the at least one high power transmission applicable band that is accessible is selected as a target band.

In S2a, it is determined whether a switching control instruction event needs to be triggered according to a pre-acquired channel quality evaluation parameter of the target terminal.

In S2a, the channel quality evaluation parameter (within the related information of a cell to which the terminal is currently connected and reported by the terminal) of the cell to which the target terminal is currently connected is acquired, and it is determined whether the switching control instruction event needs to be triggered based on the channel quality evaluation parameter.

The channel quality evaluation parameter refers to a parameter that is able to be used to evaluate the radio channel communication quality, i.e., the radio channel communication quality is able to be evaluated based on the channel quality evaluation parameter. When a current radio channel communication quality of the target terminal is poor, the switching control instruction event needs to be triggered so that the target terminal switches to the high power transmission applicable band, thereby improving the radio channel communication quality. When the current radio channel communication quality of the target terminal is good (or reaches the best), the radio channel communication quality does not need to be further improved. In this case, if the target terminal is controlled to switch to the high power transmission applicable band, the radio channel communication quality of the target terminal does not obviously improve, thereby resulting in meaningless band switching of the target terminal while wasting channel resources, so that the switching control instruction event does not need to be triggered.

In S2a, in response to determining that the switching control instruction event needs to be triggered, step S3 is performed; in response to determining that the switching control instruction event does not need to be triggered, there is no need to control the target terminal to perform the band switching.

In the present invention, the channel quality evaluation parameter refers to a parameter that is able to be used to evaluate the radio channel communication quality. In some embodiments, the channel quality evaluation parameter includes at least one of a signal to interference plus noise ratio (SINR, the larger the value, the better the radio channel communication quality), a modulation and coding scheme (MCS, the larger the value, the better the radio channel communication quality) index value, a reference signal received power (RSRP, the larger the value, the better the radio channel communication quality), a path loss (PL, the smaller the value, the better the radio channel communication quality), a transmit power headroom report (PHR, the smaller the value, the better the radio channel communication quality), a rank indication (RI, the larger the value, the better the radio channel communication quality), and a block error rate (BLER, the smaller the value, the better the radio channel communication quality).

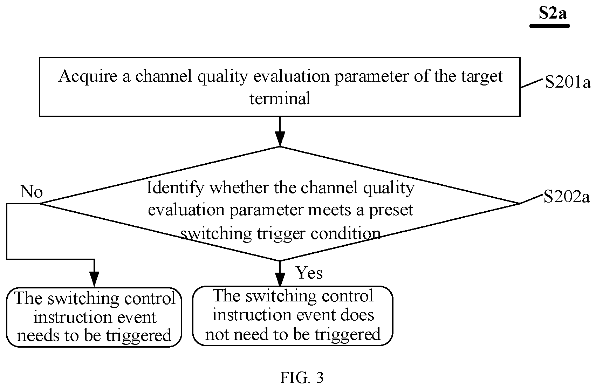

FIG. 3 is a flowchart of an alternative implementation method of step S2a. As shown in FIG. 3, in some implementations, step S2a includes the following steps.

In S201a, a channel quality evaluation parameter of the target terminal is acquired.

In S202a, it is identified whether the channel quality evaluation parameter meets a preset switching trigger condition.

It should be noted that, in some implementations, step S2a may not include step S201a, and step S201a exists as an independent step in the flow. Step S201a may be executed before step S2, or may be executed after step S2. It is only necessary to ensure that step S202a is executed after step S201a.

In response to identifying that the channel quality evaluation parameter meets the preset switching trigger condition, it is determined that the switching control instruction event needs to be triggered, and then step S3 is performed. In response to identifying that the channel quality evaluation parameter does not meet the switching trigger condition, it is determined that the switching control instruction event does not need to be triggered, and there is no need to control the target terminal to perform the band switching.

In some implementations, the channel quality evaluation parameter includes only PHR, and a preset switching trigger condition for PHR may be set as 'the value of the PHR is greater than or equal to a threshold value A'. When it is identified in step S202a that the value of PHR acquired in step S201a is greater than or equal to the threshold value A, it is determined that the switching control instruction event needs to be triggered. When it is identified in step S202a that the value of PHR acquired in step S201a is less than the threshold value A, it is determined that there is no need to trigger the switching control instruction event.

It should be noted that when PHR is acquired, PHR fluctuates with time, and stable PHR value is able to be acquired through filtering processing.

In some implementations, the channel quality evaluation parameters include three parameters of BLER, MCS, and PHR. In this case, a switching trigger condition preset for the three parameters may be set as 'BLER is greater than 0, MCS is not the maximum value, and PHR is greater than the threshold A'. When it is identified in step S202a that the value of BLER acquired in step S201a is greater than 0, MCS is not the maximum value, and PHR is greater than the threshold value A, it is determined that the switching control instruction event needs to be triggered. Otherwise, it is determined that the switching control instruction event does not need to be triggered.

It should be noted that there may be one or more channel quality evaluation parameters in the present invention, and the 'switching trigger condition' may be designed and adjusted according to the selected channel quality evaluation parameters and actual needs.

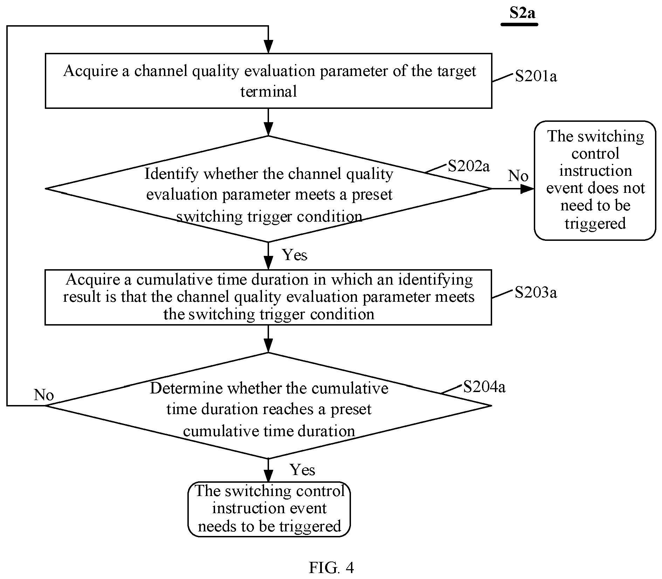

FIG. 4 is a flowchart of another alternative implementation method of step S2a, which includes the following steps.

In S201a, a channel quality evaluation parameter of the target terminal is acquired.

In S202a, it is identified whether the channel quality evaluation parameter meets a preset switching trigger condition.

In response to identifying that the channel quality evaluation parameter meets the switching trigger condition, step S203a is performed. In response to identifying that the channel quality evaluation parameter does not meet the switching trigger condition, there is no need to control the target terminal to perform the band switching.

In S203a, a cumulative time duration in which an identifying result is that the channel quality evaluation parameter meets the switching trigger condition is acquired.

In S204a, it is determined whether the cumulative time duration reaches a preset cumulative time duration.

The preset cumulative time duration is able to be designed and adjusted according to actual needs.

In S204a, in response to determining that the cumulative time duration does not reach the preset cumulative time duration, step S201a is continued; in response to determining that the cumulative time duration reaches the preset cumulative time duration, it is determined that the switching control instruction event needs to be triggered, and then step S3 is performed.

In S3, a first switching control instruction is sent to the target terminal.

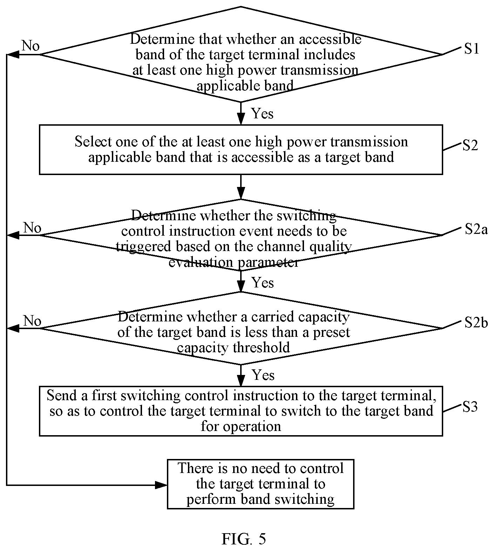

FIG. 5 is a flowchart of another band switching control method according to an embodiment of the present invention. As shown in FIG. 5, the method further includes steps S2a and S2b in addition to the above steps S1 to S3.

In S1, in response to a target terminal being configured with a high power transmission class but not operating in a high power transmission applicable band corresponding to the target terminal, it is determined that whether an accessible band of the target terminal includes at least one high power transmission applicable band.

In S1, in response to determining that the accessible band includes the at least one high power transmission applicable band corresponding to the target terminal, the step S2 is performed. And in response to determining that the accessible band does not include the high power transmission applicable band corresponding to the target terminal, there is no need to control the target terminal to perform band switching.

In S2, one of the at least one high power transmission applicable band that is accessible is selected as a target band.

In S2a, a channel quality evaluation parameter of the target terminal is acquired, and it is determined whether a switching control instruction event needs to be triggered according to the channel quality evaluation parameter.

In S2a, in response to determining that the switching control instruction event needs to be triggered, step S2b is performed; in response to determining that the switching control instruction event does not need to be triggered, there is no need to control the target terminal to perform the band switching.

In S2b, it is determined whether a carried capacity of the target band is less than a preset capacity threshold.

The capacity threshold is able to be designed and adjusted according to actual needs.

In S2b, in response to determining that the carried capacity is less than the preset capacity threshold, step S3 is performed; in response to determining that the carried capacity is greater than or equal to the preset capacity threshold, there is no need to control the target terminal to perform band switching.

In S3, a first switching control instruction is sent to the target terminal.

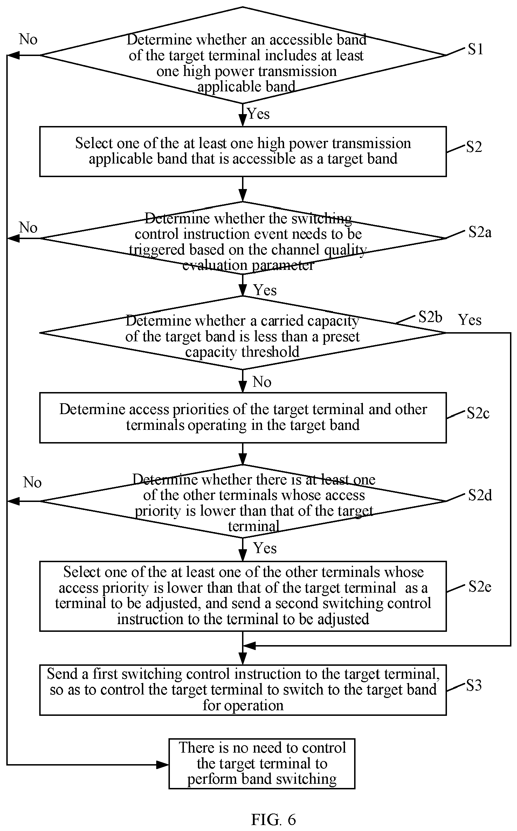

FIG. 6 is a flowchart of yet another band switching control method according to an embodiment of the present invention. As shown in FIG. 6, the method further includes steps S2a to S2e in addition to steps S1 to S3.

In S1, in response to a target terminal being configured with a high power transmission class but not operating in a high power transmission applicable band corresponding to the target terminal, it is determined that whether an accessible band of the target terminal includes at least one high power transmission applicable band.

In S1, in response to determining that the accessible band includes the at least one high power transmission applicable band corresponding to the target terminal, step S2 is performed. And in response to determining that the accessible band does not include the high power transmission applicable band corresponding to the target terminal, there is no need to control the target terminal to perform band switching.

In S2, one of the at least one high power transmission applicable band that is accessible is selected as a target band.

In S2a, a channel quality evaluation parameter of the target terminal is acquired, and it is determined whether a switching control instruction event needs to be triggered according to the channel quality evaluation parameter.

In S2a, in response to determining that the switching control instruction event needs to be triggered, step S2b is performed; in response to determining that the switching control instruction event does not need to be triggered, there is no need to control the target terminal to perform the band switching.

In S2b, it is determined whether a carried capacity of the target band is less than a preset capacity threshold.

In S2b, in response to determining that the carried capacity is less than the preset capacity threshold, step S3 is performed; in response to determining that the carried capacity is greater than or equal to the preset capacity threshold, step S2c is performed.

In S2c, access priorities of the target terminal and other terminals operating in the target band are determined.

In S2c, the access priority of the terminal is determined according to at least one of a service priority, a user priority, and a 5G slice hierarchical priority of the terminal. The access priority is positively correlated with the service priority, the access priority is positively correlated with the user priority, and the access priority is positively correlated with the 5G slice hierarchical priority.

In some implementations, when the access priority of the terminal is determined according to the service priority, the user priority, and the 5G slice hierarchical priority of the terminal, a corresponding weight value may be configured for each type of priority, a corresponding score may be set for each class included in each type of priority (the higher the class is, the higher the score is), then scores of the three types of priorities are weighted and summed to obtain a comprehensive score, and then the comprehensive score is mapped to the class corresponding to the access priority according to a preset mapping rule ( which records a mapping relationship between the comprehensive score and the access priority).

Of course, in other implementations, the access priority may also be determined based on one or a combination of two of the service priority, the user priority, and the 5G slice hierarchical priority, which are not illustrated in details herein.

In S2d, it is determined whether there is at least one of the other terminals whose access priority is lower than that of the target terminal.

In S2d, in response to determining that there is the at least one of the other terminals whose access priority is lower than that of the target terminal, step S2e is performed. In response to determining that there is no other terminal whose access priority is lower than that of the target terminal, there is no need to control the target terminal to perform band switching.

In S2e, one of the at least one of the other terminals whose access priority is lower than that of the target terminal is selected as a terminal to be adjusted, and a second switching control instruction is sent to the terminal to be adjusted.

The second switching control instruction is configured to control the terminal to be adjusted to switch from the target band to another band for operation.

In S2e, one terminal is randomly selected as the terminal to be adjusted from the at least one of the other terminals whose access priority is lower than that of the target terminal, or one terminal is selected as the terminal to be adjusted based on a particular selection rule. In some implementations, a terminal having the lowest access priority is selected as the terminal to be adjusted. It should be noted that the technical solution of the present invention does not limit the specific algorithm for selecting the terminal to be adjusted.

After performing of step S2e is completed, step S3 is performed.

In S3, a first switching control instruction is sent to the target terminal.

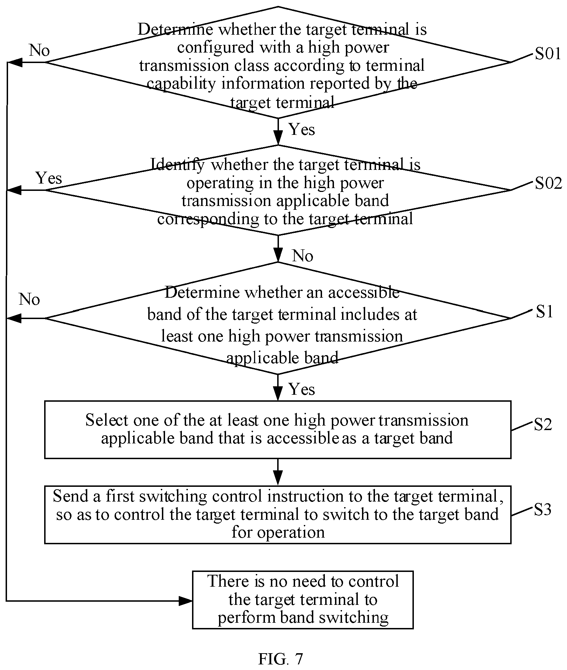

FIG. 7 is a flowchart of still yet another band switching control method according to an embodiment of the present invention. As shown in FIG. 7, the method further includes steps S01 and S02 in addition to steps S1 to S3.

In S01, it is determined whether the target terminal is configured with a high power transmission class according to terminal capability information reported by the target terminal.

In S01, in response to determining that the target terminal is configured with the high power transmission class, step S02 is performed; in response to determining that the target terminal is not configured with the high power transmission class, there is no need to control the target terminal to perform band switching.

In S02, it is identified whether the target terminal is operating in the high power transmission applicable band corresponding to the target terminal.

In S02, in response to identifying that the target terminal is not operating in the high power transmission applicable band corresponding to the target terminal, step S1 is performed; in response to identifying that the target terminal is operating in the high power transmission applicable band corresponding to the target terminal, there is no need to control the target terminal to perform band switching.

In S1, it is determined whether an accessible band of the target terminal includes at least one high power transmission applicable band.

In S1, in response to determining that the accessible band includes the at least one high power transmission applicable band corresponding to the target terminal, step S2 is performed; in response to determining that the accessible band does not include the high power transmission applicable band corresponding to the target terminal, there is no need to control the target terminal to perform band switching.

In S2, one of the at least one high power transmission applicable band that is accessible is selected as a target band.

In S3, a first switching control instruction is sent to the target terminal.

It should be noted that different steps in the above embodiments may be combined with each other to obtain new embodiments, and the technical solutions corresponding to the embodiments shall also fall within the protection scope of the present invention.

An embodiment of the present invention further provides a base station including one or more processors and a memory storing one or more programs. When the one or more programs are executed by the one or more processors, the one or more processors perform the steps in the band switching control method provided in the above embodiments.

The present invention further provides a readable storage medium storing a program, and the program may be executed to perform the steps in the band switching control method provided above, which does not describe part of the claimed invention.

Those of ordinary skill in the art should appreciate that all or some of the steps in the method disclosed above and functional modules/units in the apparatus may be implemented as software, firmware, hardware, and appropriate combinations thereof. In a hardware implementation, partitioning between functional modules/units mentioned in the above description does not necessarily correspond to partitioning of physical components. For example, a physical component may have multiple functions, or a function or step may be performed by several physical components in cooperation. Some or all of that physical components may be implemented as software executed by a processor, such as a central processing unit, digital signal processor or microprocessor, or as hardware, or as an integrated circuit, such as an application-specific integrated circuit. Such software may be distributed over computer readable media, which may include computer storage media (or non-transitory media) and communication media (or transitory media). As known to those of ordinary skill in the art, the term 'computer storage medium' includes volatile and non-volatile, removable and non-removable media implemented in any method or technique for storing information, such as computer readable instructions, data structures, program modules or other data. Computer storage media include, but are not limited to, a random access memory (RAM), read only memory (ROM), electrically erasable programmable read-only memory (EEPROM), flash memory or other memory technologies, compact disc read-only memory (CD-ROM), digital versatile disk (DVD) or other optical disk storage, magnetic cassette, magnetic tape, magnetic disk storage or other magnetic storage devices, or any other media that may be used to store desired information and that may be accessed by a computer. Furthermore, as is well known to those of ordinary skill in the art, a communication medium typically contains computer readable instructions, data structures, program modules, or other data in a modulated data signal such as a carrier wave or other transmission mechanism, and may include any information delivery medium.

## Claims

1. A band switching control method, comprising:
in response to a target terminal being configured with a high power transmission class but not operating in a high power transmission applicable band corresponding to the target terminal, determining (S1) whether an accessible band of the target terminal includes at least one high power transmission applicable band; **characterized in** further comprising:
in response to determining that the accessible band of the target terminal includes the at least one high power transmission applicable band, selecting (S2) one of the at least one high power transmission applicable band that is accessible as a target band, and sending (S3) a first switching control instruction to the target terminal to control the target terminal to switch to the target band for operation.

2. The method according to claim 1, wherein after determining that accessible band of the target terminal includes the at least one high power transmission applicable band, and before sending the first switching control instruction to the target terminal, the method further comprises:
determining (S2a) whether a switching control instruction event needs to be triggered according to a pre-acquired channel quality evaluation parameter of the target terminal; and
in response to determining that the switching control instruction event needs to be triggered, performing the step of sending (S3) the first switching control instruction to the target terminal.

3. The method according to claim 2, wherein determining whether the switching control instruction event needs to be triggered according to the pre-acquired channel quality evaluation parameter of the target terminal comprises:
identifying (S202a) whether the pre-acquired channel quality evaluation parameter meets a preset switching trigger condition; and
in response to identifying that the pre-acquired channel quality evaluation parameter meets the switching trigger condition, determining that the switching control instruction event needs to be triggered.

4. The method according to claim 2, wherein determining whether the switching control instruction event needs to be triggered according to the pre-acquired channel quality evaluation parameter of the target terminal comprises:
detecting whether the pre-acquired channel quality evaluation parameter always satisfies a preset switching trigger condition within a preset cumulative time duration; and
in response to detecting that the pre-acquired channel quality evaluation parameter always satisfies the preset switching trigger condition within the preset cumulative time duration, determining that the switching control instruction event needs to be triggered.

5. The method according to any one of claims 2 to 4, wherein after determining that the switching control instruction event needs to be triggered and before sending the first switching control instruction to the target terminal, the method further comprises:
determining (S2b) whether a carried capacity of the target band is less than a preset capacity threshold; and
in response to determining that the carried capacity is less than the preset capacity threshold, performing the step of sending (S3) the first switching control instruction to the target terminal.

6. The method according to claim 5, wherein after determining whether the carried capacity of the target band is less than the preset capacity threshold, the method further comprises:
in response to determining that the carried capacity is greater than or equal to the preset capacity threshold, determining (S2c) access priorities of the target terminal and other terminals operating in the target band; and
determining (S2d) whether there is at least one of the other terminals whose access priority is lower than that of the target terminal;
in response to determining that there is the at least one of the other terminals whose access priority is lower than that of the target terminal, selecting (S2e) one of the at least one of the other terminals whose access priority is lower than that of the target terminal as a terminal to be adjusted, and sending a second switching control instruction to the terminal to be adjusted, wherein the second switching control instruction is configured to control the terminal to be adjusted to switch from the target band to another band for operation; and
performing the step of sending (S3) the first switching control instruction to the target terminal.

7. The method according to any one of claims 2 to 6, wherein the channel quality evaluation parameter comprises at least one of a signal to interference plus noise ratio, a modulation and coding scheme index value, a reference signal received power, a path loss, a transmit power headroom report, a rank indication, and a block error rate.

8. The method according to any one of claims 1 to 7, wherein before determining whether the accessible band of the target terminal includes the at least one high power transmission applicable band, the method further comprises:
determining (S01) whether the target terminal is configured with a high power transmission class according to terminal capability information reported by the target terminal;
in response to determining that the target terminal is configured with the high power transmission class, identifying (S02) whether the target terminal is operating in the high power transmission applicable band corresponding to the target terminal; and
in response to identifying that the target terminal is not operating in the high power transmission applicable band corresponding to the target terminal, performing the step of determining (S1) whether the accessible band of the target terminal includes the at least one high power transmission applicable band.

9. A base station, comprising:
one or more processors;
a memory storing one or more programs;
wherein the one or more programs are executed by the one or more processors to cause the one or more processors to perform steps in the method according to any one of claims 1 to 8.

## Patentansprüche

1. Verfahren zur Bandumschaltungssteuerung, das umfasst:
als Reaktion darauf, dass ein Zielendgerät mit einer Hochleistungsübertragungsklasse konfiguriert ist, aber nicht in einem dem Zielendgerät entsprechenden Band, in dem eine Hochleistungsübertragung anwendbar ist, arbeitet, Bestimmen (S1), ob ein zugängliches Band des Zielendgeräts mindestens ein Band, in dem eine Hochleistungsübertragung anwendbar ist, einschließt;
**dadurch gekennzeichnet, dass** es ferner umfasst:
als Reaktion auf das Bestimmen, dass das zugängliche Band des Zielendgeräts das mindestens eine Band, in dem eine Hochleistungsübertragung anwendbar ist, einschließt, Auswählen (S2) eines des mindestens einen anwendbaren Bands, in dem eine Hochleistungsübertragung anwendbar ist, das als ein Zielband zugänglich ist, und Senden (S3) einer ersten Umschaltungssteuerungsanweisung an das Zielendgerät, um das Zielendgerät zu steuern, um zum Betrieb auf das Zielband umzuschalten.

2. Verfahren nach Anspruch 1, wobei das Verfahren nach dem Bestimmen, dass das zugängliche Band des Zielendgeräts das mindestens eine Band, in dem eine Hochleistungsübertragung anwendbar ist, einschließt, und vor dem Senden der ersten Umschaltungssteuerungsanweisung an das Zielendgerät ferner umfasst:
Bestimmen (S2a), ob ein Umschaltungssteuerungsanweisungsereignis gemäß einem vorab erfassten Kanalqualitätsbewertungsparameter des Zielendgeräts ausgelöst werden muss; und
als Reaktion auf das Bestimmen, dass das Umschaltungssteuerungsanweisungsereignis ausgelöst werden muss, Durchführen des Schritts des Sendens (S3) der ersten Umschaltungssteuerungsanweisung an das Zielendgerät.

3. Verfahren nach Anspruch 2, wobei das Bestimmen, ob das Umschaltungssteuerungsanweisungsereignis gemäß dem vorab erfassten Kanalqualitätsbewertungsparameter des Zielendgeräts ausgelöst werden muss, umfasst:
Identifizieren (S202a), ob der vorab erfasste Kanalqualitätsbewertungsparameter eine voreingestellte Umschaltungsauslösebedingung erfüllt; und
als Reaktion auf das Identifizieren, dass der vorab erfasste Kanalqualitätsbewertungsparameter die Umschaltungsauslösebedingung erfüllt, Bestimmen, dass das Umschaltungssteuerungsanweisungsereignis ausgelöst werden muss.

4. Verfahren nach Anspruch 2, wobei das Bestimmen, ob das Umschaltungssteuerungsanweisungsereignis gemäß dem vorab erfassten Kanalqualitätsbewertungsparameter des Zielendgeräts ausgelöst werden muss, umfasst:
Detektieren, ob der vorab erfasste Kanalqualitätsbewertungsparameter immer eine voreingestellte Umschaltungsauslösebedingung innerhalb einer voreingestellten kumulativen Zeitdauer erfüllt; und
als Reaktion auf das Detektieren, dass der vorab erfasste Kanalqualitätsbewertungsparameter immer die voreingestellte Umschaltungsauslösebedingung innerhalb der voreingestellten kumulativen Zeitdauer erfüllt, Bestimmen, dass das Umschaltungssteuerungsanweisungsereignis ausgelöst werden muss.

5. Verfahren nach einem der Ansprüche 2 bis 4, wobei das Verfahren nach dem Bestimmen, dass das Umschaltungssteuerungsanweisungsereignis ausgelöst werden muss, und vor dem Senden der ersten Umschaltungssteuerungsanweisung an das Zielendgerät ferner umfasst:
Bestimmen (S2b), ob eine Übertragungskapazität des Zielbands kleiner als ein voreingestellter Kapazitätsschwellenwert ist; und
als Reaktion auf das Bestimmen, dass die Übertragungskapazität kleiner als der voreingestellte Kapazitätsschwellenwert ist, Durchführen des Schritts des Sendens (S3) der ersten Umschaltungssteuerungsanweisung an das Zielendgerät.

6. Verfahren nach Anspruch 5, wobei das Verfahren nach dem Bestimmen, ob die Übertragungskapazität des Zielbands kleiner als der voreingestellte Kapazitätsschwellenwert ist, ferner umfasst:
als Reaktion auf das Bestimmen, dass die Übertragungskapazität größer als der oder gleich dem voreingestellte(n) Kapazitätsschwellenwert ist, Bestimmen (S2c) von Zugriffsprioritäten des Zielendgeräts und anderer Endgeräte, die im Zielband arbeiten; und
Bestimmen (S2d), ob es mindestens eines der anderen Endgeräte gibt, dessen Zugriffspriorität niedriger als die des Zielendgeräts ist;
als Reaktion auf das Bestimmen, dass es das mindestens eine der anderen Endgeräte gibt, dessen Zugriffspriorität niedriger als die des Zielendgeräts ist, Auswählen (S2e) eines des mindestens einen der anderen Endgeräte, dessen Zugriffspriorität niedriger als die des Zielendgeräts ist, als ein einzustellendes Endgerät, und Senden einer zweiten Umschaltungssteuerungsanweisung an das einzustellende Endgerät, wobei die zweite Umschaltungssteuerungsanweisung konfiguriert ist, um das einzustellende Endgerät zu steuern, um zum Betrieb vom Zielband auf ein anderes Band umzuschalten; und
Durchführen des Schritts des Sendens (S3) der ersten Umschaltungssteuerungsanweisung an das Zielendgerät.

7. Verfahren nach einem der Ansprüche 2 bis 6, wobei der Kanalqualitätsbewertungsparameter mindestens eines von einem Signal-zu-Interferenz-plus-Rausch-Verhältnis, einem Modulations- und Codierungsschema-Indexwert, einer Referenzsignalempfangsleistung, einem Pfadverlust, einem Übertragungsleistungsreservebericht, einer Rangangabe und einer Blockfehlerrate umfasst.

8. Verfahren nach einem der Ansprüche 1 bis 7, wobei das Verfahren vor dem Bestimmen, ob das zugängliche Band des Zielendgeräts das mindestens eine Band, in dem eine Hochleistungsübertragung anwendbar ist, einschließt, ferner umfasst:
Bestimmen (S01), ob das Zielendgerät mit einer Hochleistungs-Übertragungsklasse gemäß durch das Zielendgerät berichteten Endgerätfähigkeitsinformationen konfiguriert ist;
als Reaktion auf das Bestimmen, dass das Zielendgerät mit der Hochleistungsübertragungsklasse konfiguriert ist, Identifizieren (S02), ob das Zielendgerät im dem Zielendgerät entsprechenden Band, in dem eine Hochleistungsübertragung anwendbar ist, arbeitet; und
als Reaktion auf das Identifizieren, dass das Zielendgerät nicht im dem Zielendgerät entsprechenden Band, in dem eine Hochleistungsübertragung anwendbar ist, arbeitet, Durchführen des Schritts des Bestimmens (S1), ob das zugängliche Band des Zielendgeräts das mindestens eine Band, in dem eine Hochleistungsübertragung anwendbar ist, einschließt.

9. Basisstation, die umfasst:
einen oder mehrere Prozessor(en);
einen Speicher, der ein oder mehrere Programm(e) speichert;
wobei das eine oder die mehreren Programm(e) durch den einen oder die mehreren Prozessor(en) ausgeführt wird/werden, um den einen oder die mehreren Prozessor(en) zum Durchführen von Schritten des Verfahrens nach einem der Ansprüche 1 bis 8 zu veranlassen.

## Revendications

1. Procédé de commande de commutation de bande, comprenant :
en réponse à la circonstance où un terminal cible est configuré avec une classe de transmission à haute puissance mais n'est pas en fonctionnement dans une bande applicable de transmission à haute puissance correspondant au terminal cible, la détermination (S1) du fait qu'une bande accessible du terminal cible inclut, n'inclut pas, au moins une bande applicable de transmission à haute puissance ; **caractérisé en ce qu'**il comprend en outre :
en réponse à la détermination que la bande accessible du terminal cible inclut l'au moins une bande applicable de transmission à haute puissance, la sélection (S2) d'une de l'au moins une bande applicable de transmission à haute puissance, qui est accessible, en tant que bande cible, et l'envoi (S3) d'une première instruction de commande de commutation au terminal cible pour commander le terminal cible pour qu'il commute à la bande cible pour le fonctionnement.

2. Procédé selon la revendication 1, dans lequel, après la détermination que la bande accessible du terminal cible inclut l'au moins une bande applicable de transmission à haute puissance, et avant l'envoi de la première instruction de commande de commutation au terminal cible, le procédé comprend en outre :
la détermination (S2a) du fait qu'un événement d'instruction de commande de commutation doit, ou ne doit pas, être déclenché, selon un paramètre d'évaluation de qualité de canal pré-acquis du terminal cible ; et
en réponse à la détermination que l'événement d'instruction de commande de commutation doit être déclenché, la réalisation de l'étape de l'envoi (S3) de la première instruction de commande de commutation au terminal cible.

3. Procédé selon la revendication 2, dans lequel la détermination du fait que l'événement d'instruction de commande de commutation doit, ou ne doit pas, être déclenché, selon le paramètre d'évaluation de qualité de canal pré-acquis du terminal cible, comprend :
l'identification (S202a) du fait que le paramètre d'évaluation de qualité de canal pré-acquis respecte, ou ne respecte pas, une condition de déclenchement de commutation prédéfinie ; et
en réponse à l'identification que le paramètre d'évaluation de qualité de canal pré-acquis respecte la condition de déclenchement de commutation, la détermination que l'événement d'instruction de commande de commutation doit être déclenché.

4. Procédé selon la revendication 2, dans lequel la détermination du fait que l'événement d'instruction de commande de commutation doit, ou ne doit pas, être déclenché, selon le paramètre d'évaluation de qualité de canal pré-acquis du terminal cible, comprend :
la détection du fait que le paramètre d'évaluation de qualité de canal pré-acquis satisfait, ou ne satisfait pas, toujours à une condition de déclenchement de commutation prédéfinie dans les limites d'un laps de temps cumulatif prédéfini ; et
en réponse à la détection que le paramètre d'évaluation de qualité de canal pré-acquis satisfait toujours à la condition de déclenchement de commutation prédéfinie dans les limites du laps de temps cumulatif prédéfini, la détermination que l'événement d'instruction de commande de commutation doit être déclenchée.

5. Procédé selon l'une quelconque des revendications 2 à 4, dans lequel, après la détermination que l'événement d'instruction de commande de commutation doit être déclenché et avant l'envoi de la première instruction de commande de commutation au terminal cible, le procédé comprend en outre :
la détermination (S2b) du fait qu'une capacité portée de la bande cible est, ou n'est pas, inférieure à un seuil de capacité prédéfini ; et
en réponse à la détermination que la capacité portée est inférieure au seuil de capacité prédéfini, la réalisation de l'étape de l'envoi (S3) de la première instruction de commande de commutation au terminal cible.

6. Procédé selon la revendication 5, dans lequel après la détermination du fait que la capacité portée de la bande cible est, ou n'est pas, inférieure au seuil de capacité prédéfini, le procédé comprend en outre :
en réponse à la détermination que la capacité portée est supérieure ou égale au seuil de capacité prédéfini, la détermination (S2c) de priorités d'accès du terminal cible et d'autres terminaux en fonctionnement dans la bande cible ; et
la détermination (S2d) du fait qu'il y a, il n'y a pas, au moins un des autres terminaux dont la priorité d'accès est inférieure à celle du terminal cible ;
en réponse à la détermination qu'il y a l'au moins un des autres terminaux dont la priorité d'accès est inférieure à celle du terminal cible, la sélection (S2e) d'un de l'au moins un des autres terminaux, dont la priorité d'accès est inférieure à celle du terminal cible, en tant que terminal devant être réglé, et l'envoi d'une seconde instruction de commande de commutation au terminal devant être réglé, dans lequel la seconde instruction de commande de commutation est configurée pour commander le terminal devant être réglé pour commuter de la bande cible à une autre bande pour le fonctionnement ; et
la réalisation de l'étape de l'envoi (S3) de la première instruction de commande de commutation au terminal cible.

7. Procédé selon l'une quelconque des revendications 2 à 6, dans lequel le paramètre d'évaluation de qualité de canal comprend au moins un élément parmi un rapport signal utile-signal brouilleur plus bruit, une valeur d'indice de technique de modulation et de codage, une puissance reçue de signal de référence, un affaiblissement de propagation, un rapport de marge de puissance de transmission, une indication d'étage, et un taux d'erreurs sur les blocs.

8. Procédé selon l'une quelconque des revendications 1 à 7, dans lequel, avant la détermination du fait que la bande accessible du terminal cible inclut, ou n'inclut pas, l'au moins une bande applicable de transmission à haute puissance, le procédé comprend en outre :
la détermination (S01) du fait que le terminal cible est, ou n'est pas, configuré avec une classe de transmission à haute puissance selon des informations de capacité de terminal rapportées par le terminal cible ;
en réponse à la détermination que le terminal cible est configuré avec la classe de transmission à haute puissance, l'identification (S02) du fait que le terminal cible est, ou n'est pas, en fonctionnement dans la bande applicable de transmission à haute puissance correspondant au terminal cible ; et
en réponse à l'identification que le terminal cible n'est pas en fonctionnement dans la bande applicable de transmission à haute puissance correspondant au terminal cible, la réalisation de l'étape de la détermination (S1) du fait que la bande accessible du terminal cible inclut, ou n'inclut pas, l'au moins une bande applicable de transmission à haute puissance.

9. Station de base, comprenant :
un ou plusieurs processeurs ;
une mémoire stockant un ou plusieurs programmes ;
dans lequel l'un ou les plusieurs programmes sont exécutés par l'un ou les plusieurs processeurs pour amener l'un ou les plusieurs processeurs à réaliser des étapes dans le procédé selon l'une quelconque des revendications 1 à 8.
